**Europäisches Patentamt**

(19) **European Patent Office**

**Office européen des brevets**

(11) Numéro de publication: **0 046 702**
**B1**

(12) **FASCICULE DE BREVET EUROPEEN**

(45) Date de publication du fascicule du brevet:
15.02.84

(51) Int. Cl.³: **F 41 F 21/02,** F 16 M 11/12

(21) Numéro de dépôt: **81401247.2**

(22) Date de dépôt: **31.07.81**

(54) **Dispositif de lancement et de guidage pour projectiles.**

(30) Priorité: **26.08.80 FR 8018484**

(43) Date de publication de la demande:
**03.03.82 Bulletin 82/9**

(45) Mention de la délivrance du brevet:
**15.02.84 Bulletin 84/7**

(84) Etats contractants désignés:
**BE DE GB IT SE**

(56) Documents cités:
**CH - A - 304 061**
**FR - A - 361 175**
**FR - A - 2 176 269**
**FR - A - 2 418 390**
**US - A - 2 411 270**
**US - A - 2 430 636**
**US - A - 3 877 552**

(73) Titulaire: **ETAT-FRANCAIS représenté par le DELEGUE GENERAL POUR L'ARMEMENT, Bureau des Brevets et Inventions de la Délégation Générale pour l'Armement 14, rue Saint-Dominique, F-75997 Paris Armées (FR)**

(72) Inventeur: **Abadie, Edmond, 190, avenue de Dun, F-18000 Bourges (FR)**
Inventeur: **Sautereau, Claude, Résidence du Parc Pigny Villeneuve, F-18110 Saint-Martin D'Auxigny (FR)**

ACTORUM AG

Dispositif de lancement et de guidage pour projectiles

La présente invention concerne un dispositif de lancement et de guidage pour projectiles tels que par exemple des roquettes ou des missiles tirés à partir de tubes de lancement montés sur un affût permettant le pointage de la cible et les mouvements en site et en gisement du tube de lancement avant ou après le tir.

Un tel dispositif de lancement et de guidage est décrit dans le brevet français nº 1 527 339. Il comprend: un tube de lancement 2 solidaire d'organes de visée, un trépied posé à un endroit stable, et des moyens permettant les mouvements en site et en gisement du tube de lancement. Ces moyens sont constitués d'une part par un montage vis-secteur denté pour le mouvement en site, et d'autre part par des disques parallèles espacés faiblement les uns des autres et fixés alternativement à la partie fixe (trépied) et à la partie mobile (fourche d'articulation) de l'affût. Un liquide amortisseur se trouve entre ces disques et permet d'obtenir une vitesse de rotation uniforme durant le mouvement de l'arme en gisement, pendant la phase de poursuite de l'objectif mobile.

Un tel dispositif de lancement et de guidage présente de nombreux inconvénients. Parmi les plus importants, on constate la difficulté de suivre la cible avec des écarts faibles. En effet, lors des mouvements en site, le couple vis sans fin-secteur denté est le siège de jeux néfastes à une bonne précision. De plus, la régularité des mouvements en gisement sont perturbés par des frottements solides au niveau des disques qui introduisent des à-coups gênants. Un autre inconvénient de ce dispositif provient du fait que la viscosité du liquide amortisseur placé entre les disques est variable en fonction de la température, et que les espaces entre les disques sont fixes. Ainsi pour régler la vitesse de rotation en gisement en fonction de la vitesse du mouvement de l'objectif, l'opérateur doit exercer un effort moteur variable sur la poignée de commande 13, ce qui est incompatible avec une bonne précision de tir ou de poursuite de l'objectif.

Le dispositif selon l'invention vise à pallier les inconvénients des systèmes de lancement et de guidage connus. En effet, le système de guidage et de lancement selon l'invention permet la poursuite de l'objectif avec une précision très grande dûe d'une part à l'absence de jeu du mécanisme de pointage en site, et d'autre part à une diminution des frottements solides dans le mécanisme de mouvement en gisement au profit des frottements visqueux. Cette invention permet également de régler la vitesse de déplacement en gisement tout en exerçant un effort moteur pratiquement constant, ce qui facilite la manœuvre de poursuite et augmente la probabilité d'atteinte de la cible. Ce système offre également l'avantage de pouvoir être utilisé quelles que soient les conditions de température sans que la précision et la facilité de manipulation ne soient affectées;

en effet, le système de réglage de la vitesse de poursuite en gisement est utilisé pour compenser les différences de viscosité du liquide amortisseur dues à des fluctuations de température.

Le but de la présente invention est de fournir un dispositif répondant aux exigences précitées. A cette fin, l'invention a pour objet un dispositif de lancement et de guidage d'un projectile, comprenant un support tel qu'un trépied, une platine destinée à recevoir une arme mobile en site et en gisement, des moyens de réglage de la vitesse de déplacement en gisement caractérisé en ce que les dits moyens de réglage sont constitués par:

– un corps solidaire du support comportant deux cavités cylindriques fermées à l'une de leurs extrémités,
– des pistons coulissant dans les cavités cylindriques avec lesquelles ils délimitent deux chambres de cylindrée égale contenant un fluide.
– un orifice calibré mettant en communication les deux chambres,
– un moyen de commande des pistons conçu de façon à ce qu'une chambre se vide alors que l'autre se remplit,
– des moyens permettant d'obturer plus on moins la conduite
– des moyens de transmission de mouvement disposés entre les pistons et la platine.

Les axes des cavités cylindriques peuvent être coplanaires, parallèles ou peuvent avoir une même direction.

Selon une autre caractéristique, les pistons sont reliés par une liaison rigide. La conduite mettant en communication les deux chambres peut avantageusement être disposée à l'intérieur de la liaison rigide.

Selon un mode de réalisation, les moyens de transmission disposés entre les pistons et la platine peuvent être constitués par un couple crémaillère-roue dentée.

Selon une autre caractéristique, les moyens permettant d'obturer plus ou moins la conduite sont constitués par une aiguille pénétrant plus ou moins dans un orifice calibré. L'aiguille peut avoir une forme conique ou peut être constituée par une succession de troncs de cônes d'angle au sommet variable. De façon avantageuse, les cavités cylindriques, les pistons, la conduite, l'orifice calibré et l'aiguille sont disposés sur un même axe.

Le dispositif selon l'invention est également caractérisé par le fait que le mouvement en site de l'arme est réalisé par un balancier solidaire de la platine, basculant autour d'un axe de basculement commandé par deux poussoire disposés de part et d'autre et à égale distance de l'axe de basculement actionnés par deux cames disposées sur un axe solidaire d'une poignée de réglage de l'angle de site.

L'invention sera mieux comprise à l'aide de la description d'un mode de réalisation particulier qui va suivre faite en regard des dessins annexés.

- la figure 1 représente une vue d'ensemble en perspective (trois quart avant) du dispositif de guidage et de lancement selon l'invention
- la figure 2 représente une vue d'ensemble en perspective (trois quart arrière) du même dispositif
- la figure 3 représente une coupe longitudinale du système de réglage de la vitesse du mouvement en gisement
- la figure 4 représente une vue simplifiée en perspective du système de pointage en site.

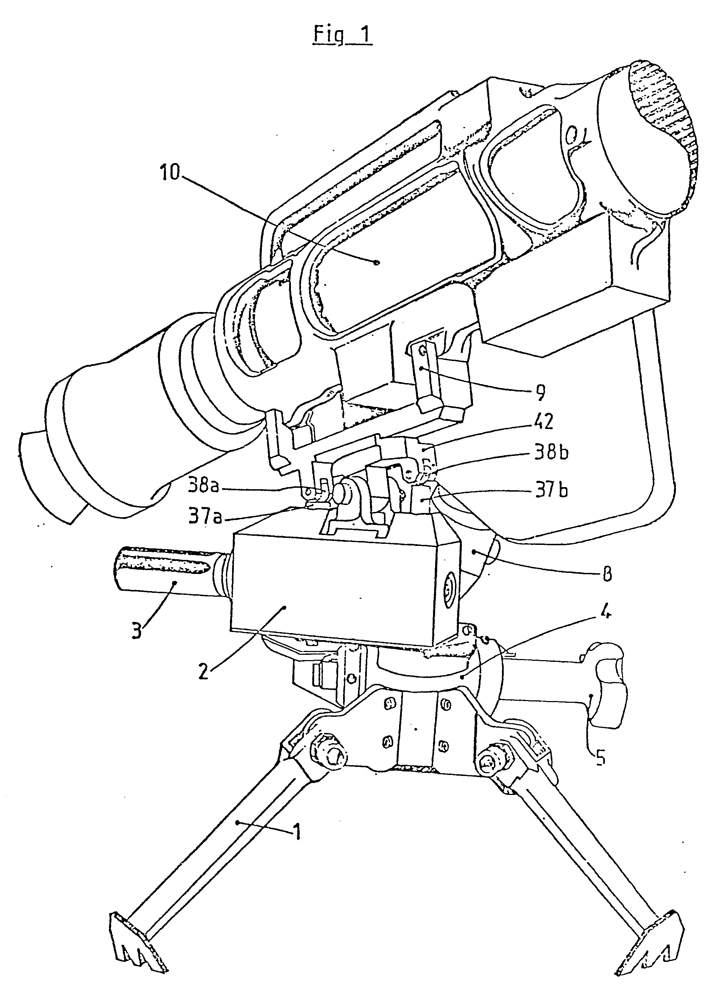

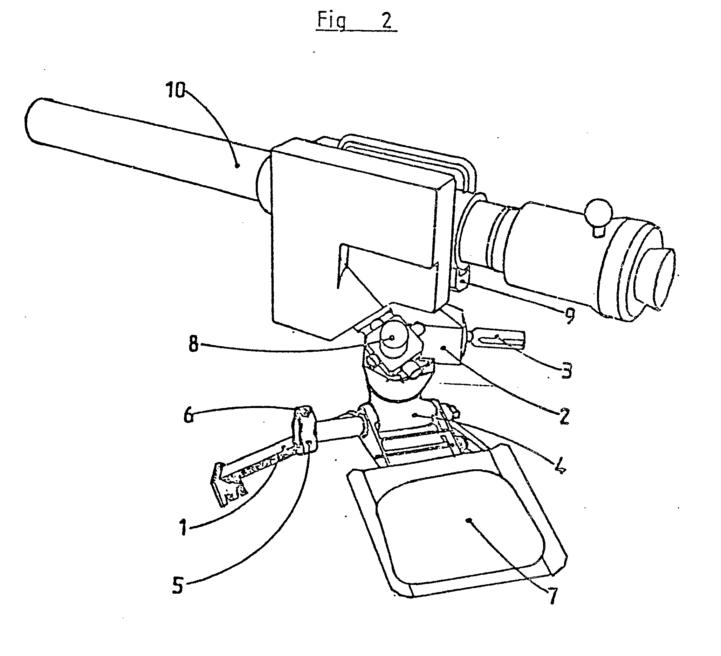

Le dispositif de guidage et de lancement représenté aux figures 1 et 2 comporte un support ou trépied 1, un dispositif de pointage en site 2 actionné par la rotation de la poignée 3, un dispositif de réglage 4 de la vitesse de rotation du mouvement en gisement actionné par la poignée 5 qui comporte la commande de mise de feu 6. La partie basse du dispositif comprend également un appui-buste 7 offrant à l'opérateur une position convenable pour effectuer le pointage de l'objectif par l'intermédiaire de l'organe de visée 8. Le dispositif de pointage en site est surmonté par une platine 9 sur laquelle est fixée l'arme 10 qui, dans ce cas particulier, est une lance roquette antichar.

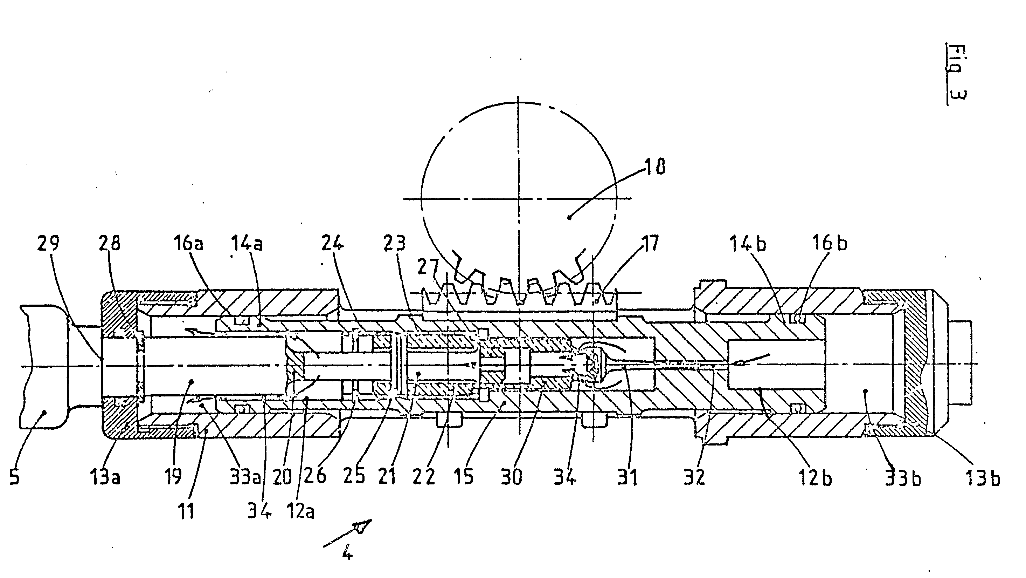

Le dispositif de réglage de la vitesse du mouvement en gisement est représenté en détail à la figure 3. Il comprend: un corps 11 comportant deux alésages 12a et 12b fermés à leurs extrémités par des bouchons 13a et 13b. A l'intérieur de ces alésages 12a et 12b coulissent deux pistons 14a et 14b reliés entre eux rigidement par une liaison qui sert également de moyen de comande 15. Des joints 16a et 16b assurent l'étanchéité entre les pistons et les alésages. Une crémaillère 17 est fixée par des moyens connus et non décrits à la liaison 15 et transforme le mouvement du pignon 18, lié en rotation à la platine 9, en un mouvement de translation de la liaison 15 et des pistons 14a et 14b. Le bouchon 13a est traversé de façon étanche par un arbre 19 qui se prolonge par une partie 20 de diamètre inférieur, munie d'une rainure longitudinale 21. Cette partie 20 est ajustée à l'intérieur de l'alésage d'une pièce filetée 22 dont la surface latérale est munie d'un filetage 23.

Cette pièce 22 est vissée dans une partie interne filetée 24 de la liaison 15. D'autre part, la pièce filetée 22 est traversée par une goupille 25 qui passe au travers de la rainure 21. Cette goupille 25 possède un diamètre sensiblement égal à la largeur de la rainure 21, ce qui permet le coulissement relatif de la pièce filetée 22 par rapport à la pièce 19 tout en assurant une liaison en rotation de ces deux pièces.

La course de la pièce filetée 22 est limitée par un circlips 26 logé dans une gorge de la liaison 15. La poignée 5 ainsi que l'arbre 19 sont liés en translation au bouchon 13a par l'intermédiaire d'un circlips 28 et de l'épaulement 29.

La pièce filetée 22 se prolonge par une partie cylindrique creuse 30 dont l'extrémité comporte une aiguille 31 de forme conique qui pénètre dans un orifice calibré 32 de la liaison 15. Cet orifice calibré débouche dans une chambre 33b limitée par le pistons 14b, le bouchon 13b et l'alésage 12b. Les deux chambres 33 a et 33b sont remplies de fluide qui peut être par exemple une huile classique utilisée en hydraulique. Lorsque l'aiguille 31 permet le passage du fluide, ce dernier peut circuler entre les deux chambres 33a et 33b grâce à des jeux et des perçages convenablement disposés, tels que par exemple l'espace 34 existant entre l'arbre 19 et l'alésage intérieur du pistons 14a. Pour faciliter la compréhension on a représenté par des flèches (figure 3) le cheminement du fluide de la chambre 33b vers la chambre 33a en supposant que l'aiguille 31 ouvre le passage par l'orifice calibré 32 et que les pistons et le moyen de commande 15 se déplacent vers la partie droite de la figure.

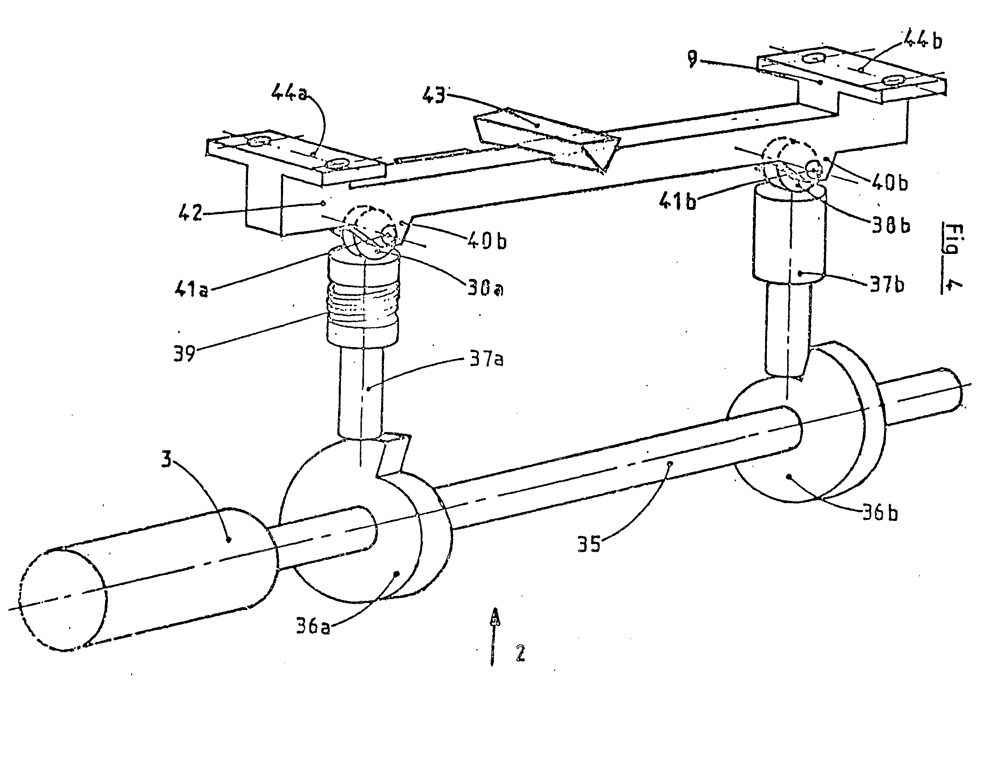

La figure 4 représente l'organisation du dispositif de pointage en site 2. Il comporte une poignée de règlage en site 3 prolongée par un arbre 35 tournant dans des paliers pratiqués sur l'affût. Deux cames 36a et 36b dont le profil est à pas contraire sont solidaires de l'arbre 35. Ces cames 36a et 36b sont surmontées par deux poussoirs 37a et 37b dont la partie supérieure est en contact avec deux galets 38a et 38b. Il faut noter que l'un des poussoirs 37a ou 37b, et par exemple 37a comporte des moyens élastiques 39 constitués avantageusement par des rondelles expansibles du type Belleville, qui permettent de compenser totalement les jeux néfastes à la précision du pointage. Les galets 38a et 38b sont montés dans des chapes 40a et 40b avec les axes 41a et 41b. Ces chapes sont solidaires d'un balancier 42 qui pivote sous un couteau 43 solidaire de l'affût. Le balancier 42 comporte des surfaces 44a et 44b qui constituent la platine sur laquelle est montée l'arme.

Le fonctionnement du dispositif selon l'invention est le suivent. L'opérateur est alongé avec le torse disposé sur l'appuibuste 7 (figure 2), la main gauche tenant la poignée 5 de règlage de la vitesse de gisement, la main droite tenant la poignée de site 3, un œil étant placé sur le dispositif de visée 8. La main droite fournit l'effort moteur nécessaire au mouvement de gisement tout en permettant le réglage de la position en site, alors que la main gauche permet le réglage de la vitesse de poursuite de l'objectif. La rotation de la poignée 5 entraîne, par l'intermédiaire de l'arbre 19, de son prolongement 20 et de la goupille 25, la pièce filetée 22 qui perment grâce au filetage 23 le dégagement ou l'engagement de l'aiguille 31 dans l'orifice calibré 32, laminant plus ou moins le passage du fluide entre les deux chambres (figure 3). Il est bien évident que plus la section de passage du fluide entre l'aiguille 31 et l'orifice calibré 32 est grande, plus la vitesse de rotation en gisement est élevée. Le déplacement du moyen de commande 15 et des deux pistons est réalisée grâce à la roue dentée 18 fixée sur l'affût et la crémaillère solidaire du moyen de commande 15, l'effort moteur étant fourni à la roue dentée 18 par la main droite. Un des avantages de ce système est de pouvoir être utilisé quelque soit les conditions de température agissant pourtant directement sur la viscosité du fluide; en effet, la compensation de variation de viscosité est équilibrée directement par un réglage de l'aiguille qui est plus ou moins engagée par l'opérateur dans l'orifice calibré 32.

Le pointage en site est effectué en actionnant en rotation la poignée 3 qui entraîne les cames 36a et 36b (figure 4) – Les poussoirs 37a et 37b glissent le long des profils à pas contraire des cames et permettent le basculement du balancier 42 autour du couteau 43 par l'intermédiaire des galets 38a et 38b.

La mise de feu est actionnée à l'instant opportun en agissant sur la commande 6.

**Revendications**

1. Dispositif de lancement et de guidage d'un projectile, comprenant un support tel qu'un trépied (1), une platine (9) destinée à recevoir une arme (10) mobile en site et en gisement, des moyens de réglage de la vitesse de déplacement en gisement caractérisé en ce que les dits moyens de réglage sont constitués par:

– un corps (11) solidaire du support (1) comportant deux cavités cylindriques (12a et 12b) fermées à l'une de leurs extrémités,

– des pistons (14a et 14b) coulissant dans les cavités cylindriques (33a et 33b) avec lesquelles ils délimitent deux chambres (33a et 33b) de cylindrée égale contenant un fluide,

– un orifice calibré (32) mettant en communication le deux chambres,

– un moyen de commande (15) des pistons conçu de façon à ce qu'une chambre se vide alors que l'autre se remplit,

– des moyens (31) permettant d'obturer plus ou moins la conduite,

– des moyens de transmission de mouvement (17, 18) disposés entre les pistons (14a et 14b) et la platine (9).

2. Dispositif de lancement et de guidage de projectile, selon la revendication 1, caractérisé en ce que les axes des cavités cylindriques, (12a et 12b) sont coplanaires.

3. Dispositif, selon la revendication 1, caractérisé en ce que les axes des cavités cylindriques (12a et 12b) sont parallèles.

4. Dispositif, selon la revendication 1, caractérisé en ce que les axes des cavités cylindriques (12a et 12b) ont une même direction.

5. Dispositif, selon l'une des revendications 3 ou 4 caractérisé en ce que les pistons (14a et 14b) sont reliés par une liaison rigide représentée par le moyen de commande (15).

6. Dispositif, selon la revendication 5 caractérisé en ce que l'orifice calibré (32) mettant en communication les deux chambres est disposée à l'intérieur du moyen de commande (15).

7. Dispositif, selon l'une quelconque des revendications 3 à 6, caractérisé en ce que les moyens de transmission disposés entre les pistons et la platine sont constitués par un couple crémaillère(17)-roue dentée (18).

8. Dispositif, selon l'une quelconque des revendications précédentes, caractérisé en ce que les moyens permettant d'obturer plus ou moins l'orifice calibré (32) sont constitués par une aiguille (31) pénétrant plus ou moins dans ledit orifice calibré (32).

9. Dispositif selon la revendication 8, caractérisé en ce que l'aiguille (31) a une forme conique ou est constituée par une succession de troncs de cônes d'angle au sommet variable.

10. Dispositif selon l'une des revendications 8 ou 9 caractérisé en ce que les cavités cylindriques (12a et 12b), les pistons (14a et 14b) l'orifice calibre (32) et l'aiguille (31) sont disposés sur un même axe.

11. Dispositif selon l'une des revendications précédentes, caractérisé en ce que le mouvement en site de l'arme est réalisé par un balancier (42) solidaire de la platine (9), basculant autour d'un axe de basculement constitué par une arrête de couteau (43), commandé par deux poussoirs (37a, 37b) disposés de part et d'autre du couteau (43) et à égale distance de ce dernier et actionnés par deux cames (36a et 36b) disposées sur un axe solidaire d'une poignée de réglage (3) de l'angle de site.

**Patentansprüche**

1. Vorrichtung zum Abschuss und zur Führung eines Geschosses, die einen Träger, wie ein Dreibeinstativ (1), eine Platine (9) zur Aufnahme einer mobilen Waffe (10) auf Standort und Gelände, Mittel zur Regelung der Fluggeschwindigkeit auf dem Gelände umfasst, dadurch gekennzeichnet, dass die besagten Mittel zur Regelung bestehen aus:

– einem mit dem Träger (1) formschlüssig verbundenen Körper (11) mit zwei zylindrischen Hohlräumen (12a und 12b), an einem Ende geschlossen,

– Kolben (14a und 14b), die in den zylindrischen Hohlräume (33a und 33b) gleiten, mit denen sie zwei Kammern (33a und 33b) mit gleichem Hubraum bilden, die eine Flüssigkeit enthalten,

– einer kalibrierten Öffnung (32), die die beiden Kammern verbindet,

– einem Steuermittel (15) der Kolben dergestalt, dass eine Kammer sich entleert, während die andere gefüllt wird,

– Mittel (31) mit denen die Führung mehr oder weniger verschlossen werden kann,

– Mittel zur Bewegungsübertragung (17, 18), zwischen den Kolben (14a und 14b) und der Platine (9) angeordnet.

2. Vorrichtung zum Abschuss und zur Führung eines Geschosses nach Anspruch 1, dadurch gekennzeichnet, dass die Achsen der zylindrischen Hohlräume (12a und 12b) koplanar sind.

3. Vorrichtung nach Anspruch 1, dadurch gekennzeichnet, dass die Achsen der zylindrischen Hohlräume (12a und 12b) parallel sind.

4. Vorrichtung nach Anspruch 1, dadurch gekennzeichnet, dass die Achsen der zylindrischen Hohlräume (12a und 12b) die gleiche Richtung haben.

5. Vorrichtung nach einem der Ansprüche 3 oder 4, dadurch gekennzeichnet, dass die Kolben (14a und 14b) eine starre Verbindung in Form des Steuermittels (15) haben.

6. Vorrichtung nach Anspruch 5, dadurch gekennzeichnet, dass die kalibrierte Öffnung (32), die die beiden Kammern verbindet, sich im Steuermittel (15) befindet.

7. Vorrichtung nach einem der Ansprüche 3 bis 6, dadurch gekennzeichnet, dass die zwischen den Kolben und der Platine angeordneten Übertragungsmittel aus einer Zahnstange (17) und einem Zahnrad (18) bestehen.

8. Vorrichtung nach einem der vorhergehenden Ansprüche, dadurch gekennzeichnet, dass die Mittel, mit denen die kalibrierte Öffnung (32) mehr oder weniger verschlossen werden kann, aus einer Nadel (31) bestehen, die mehr oder weniger in besagte kalibrierte Öffnung (32) eindringt.

9. Vorrichtung nach Anspruch 8, dadurch gekennzeichnet, dass die Nadel (31) eine Kegelform hat oder aus einer Reihe Winkelkegelstümpfen mit unterschiedlicher Spitze besteht.

10. Vorrichtung nach einem der Ansprüche 8 oder 9, dadurch gekennzeichnet, dass die zylindrischen Hohlräume (12a und 12b), die Kolben (14a und 14b), die kalibrierte Öffnung (32) und die Nadel (31) auf einer selben Achse liegen.

11. Vorrichtung nach einem der vorgenannten Ansprüche, dadurch gekennzeichnet, dass die Bewegung der Waffe am Standort durch ein mit der Platine (9) formschlüssig verbundenes Pendel (42) erfolgt, das um eine Schwenkachse schwenkt, die aus einer Messerkante (43) besteht und von zwei Schiebern (37a, 37b) gesteuert wird, die beidseitig des Messers (43) und in gleichem Abstand von letzterem angeordnet sind und durch zwei Nocken (36a und 36b) bestätigt werden, die auf einer mit einem Regelgriff (3) des Standortwinkels formschlüssig verbundenen Achse angeordnet sind.

## Claims

1. Projectile launching and guidance device consisting of a support such as a tripod (1), a plate (9) designed to receive an arm (10) moving in elevation and bearing, means for ajusting bearing movement speed characterized in that said adjusting means consist of:

- a body (11) integral with support (1) comprising two cylindrical cavities (12a and 12b), closed at one of their ends,
- pistons (14a and 14b) sliding inside cylindrical cavities 33a and 33b) with which they form two chambers (33a and 33b) of equal cylinder capacity, containing a fluid,
- a calibrated port (32) intercommunicating between the two chambers,
- a piston control device (15) designed in such a manner that one chamber empties while the other is filling,
- devices (31) designed to block the duct to a greater or lesser degree,
- movement transmission means (17, 18) disposed between pistons (14a and 14b) and plate (9).

2. Projectile launching and guidance device, according to Claim 1, characterized in that the axes of the cylindrical cavities (12a and 12b) are coplanar.

3. Device according to Claim 1, characterized in that the axes of the cylindrical cavities (12a and 12b) are parallel.

4. Device according to Claim 1, characterized in that the axes of the cylindrical cavities (12a and 12b) are in the same direction.

5. Device according to one Claims 3 or 4, characterized in that the piston (14a and 14b) are connected by a rigid link represented by control device (15).

6. Device according to Claim 5, characterized in that the calibrated port (32) intercommunicating between the two chambers is disposed inside the control device (15).

7. Device according to any Claims 3 to 6, characterized in that the transmission means placed between the pistons and the plate consist of a rack (17) — gear wheel (18) assembly.

8. Device according to any of the previous claims, characterized in that the means serving to block the calibrate port (33) to a greater or lesser extent, consist of a needle (31) entering said calibrated port (32) to a greater or lesser extent.

9. Device according to Claim 8, characterized in that needle (31) is tapered or consists of a succession of angle-cone sections with a variable summit angle.

10. Device according to one Claim 8 or 9, characterized in that the cylindrical cavities (12a and 12b), pistons (14a and 14b), calibrated port (32) and needle (31) are disposed on the same axis.

11. Device according to one of the previous claims, characterized in that the elevation movement of the weapon is obtained by a rocker arrangement (42) integral with the plate (9), swiveling about a swivel axis consisting of a knife edge (43), controlled by two plungers (37a, 37b), placed either side of knife edge (43) at distances from it and actuated by two cams (36a and 36b) arranged on an axis integral with an elevation angle adjusting handle (3).

## Fig 1

Fig 2

Fig 3

Fig. 4